# EUROPÄISCHE PATENTANMELDUNG

(11) **EP 2 179 874 A1**
(43) Veröffentlichungstag der Anmeldung: **28.04.2010**
(21) Anmeldenummer: 09013275.4
(22) Anmeldetag: 21.10.2009
(51) Int. Cl.: B60G 21/05

(54) **Quertraeger einer Fahrzeugachse**

(30) Priorität: 21.10.2008 DE 102008052554
(71) Anmelder: Benteler Automobiltechnik GmbH, 33102 Paderborn (DE)
(72) Erfinder: Hutabarat, Goddy, 33102 Paderborn (DE); Czerr, Siegmund, 33659 Bielefeld (DE); Christophliemke, Wigbert, 33758 Schloss Holte-Stukenbrock (DE)
(74) Vertreter: Ksoll, Peter

(57) **Zusammenfassung**

Bei einem Querträger (1) einer Fahrzeugachse sind unter Ausbildung einer Längsrinne (2) zwischen rohrförmigen torsionssteifen Trägerenden (3) ein doppelwandiger, im Querschnitt U-förmiger torsionsweicher Mittelabschnitt (4) und zwischen den Trägerenden (3) und dem Mittelabschnitt (4) vom rohrförmigen in den U-förmigen Querschnitt kontinuierlich wechselnde Übergangszonen (5) vorgesehen. In den Übergangszonen (5) sind neben den bodenseitigen Abschnitten (12) der die Längsrinne (2) begrenzenden inneren Wandbereiche (7) liegende Abschnitte (11) der äußeren Wandbereiche (8) mit sich längs erstreckenden muldenartigen Einprägungen (9) versehen.

## Beschreibung

Die Erfindung betrifft einen Querträger einer Fahrzeugachse gemäß den Merkmalen im Oberbegriff des Anspruchs 1.

Ein solcher Querträger bildet im Umfang der EP 0 752 332 A1 Stand der Technik. Bei diesem sind unter Ausbildung einer Längsrinne zwischen rohrförmigen torsionssteifen Trägerenden ein doppelwandiger, im Querschnitt U-förmiger torsionsweicher Mittelabschnitt und zwischen den Trägerenden und dem Mittelabschnitt vom rohrförmigen in den U-förmigen Querschnitt kontinuierlich wechselnde Übergangszonen vorgesehen. Der Querträger bildet insbesondere Bestandteil einer Verbundlenkerhinterachse, einer Koppellenkerachse oder einer Twist Beam-Achse eines Personenkraftwagens bzw. des Führerhauses eines Lastkraftwagens.

Im bekannten Fall der EP 0 752 332 A1 werden endseitig des Mittelabschnitts Sektoren der die Längsrinne begrenzenden inneren Wandbereiche mit Sektoren der äußeren Wandbereiche mittels gleichsinnig nach innen oder Sektoren der äußeren Wandbereiche mittels gleichsinnig nach außen oder innen geprägter Mulden miteinander verclincht. Eine derartige Verclinchung bzw. Verriegelung der inneren Wandbereiche mit den äußeren Wandbereichen soll verhindern, dass es bei dynamischen Belastungen des Querträgers nicht zu einer drehenden Relativbewegung zwischen den beiden Wandbereichen kommen kann.

Obwohl sich die bekannte Bauart in der Praxis bewährt hat, zeigt gerade der praktische Einsatz, dass in den Übergangszonen zwischen dem Mittelabschnitt und den Trägerenden mehrfach Schäden auftraten.

Die aktuellen Querträger (Torsionsprofile) im Fahrbetrieb eines Kraftfahrzeugs erlauben nämlich keine gleichmäßige Beanspruchung über den gesamten Bauteil. Es gibt Bereiche mit sehr hohen Spannungsspitzen. Diese ungleiche Spannungsverteilung resultiert aus einer Steifigkeitsänderung vom torsionsweichen Mittelabschnitt zum steifen Trägerende. Aufgrund der Geometrieänderung erfolgt gleichzeitig eine Verlagerung der Schubmittelpunktslage. Im torsionsweichen Mittelabschnitt (V- oder U-förmiger Querschnitt) liegt dieser Punkt außerhalb des Profilquerschnitts und an den Trägerenden innerhalb des Profilquerschnitts. Diese Verlagerung des Schubmittelpunkts induziert zusätzliche Spannungsspitzen in den Querträger.

Der Erfindung liegt - ausgehend vom Stand der Technik - die Aufgabe zu Grunde, einen Querträger einer Fahrzeugachse zu schaffen, bei welchem die in den Übergangszonen zwischen den torsionssteifen Trägerenden und dem torsionsweichen Mittelabschnitt auftretenden Spannungen mit dem Ziel einer Entlastung der Übergangszonen merklich gesenkt werden.

Die Lösung dieser Aufgabe besteht nach der Erfindung in den Merkmalen des Anspruchs 1.

Dementsprechend sind in den Übergangszonen neben den bodenseitigen Abschnitten der die Längsrinne begrenzenden inneren Wandbereiche liegende Abschnitte der äußeren Wandbereiche mit sich längs erstreckenden muldenartigen Einprägungen versehen.

Es erfolgt also nicht mehr eine Verclinchung der inneren mit den äußeren Wandbereichen endseitig des Mittelabschnitts, sondern eine gezielte Veränderung des Steifigkeitsverhaltens in den Übergangszonen. Auf Grund dieser Gestaltung verteilen sich die Spannungen bei dynamischen Belastungen gleichmäßiger auf größere Bereiche, wobei eine Senkung der Spannungen bis zu 20 % erreicht werden kann, was eine Lebensdauerverbesserung von mehr als 75 % bedeutet. Der Schubmittelpunkt wird verlagert und es ergibt sich auch eine Änderung des Torsionsflächen-Trägheitsmoments. Insbesondere wird der Schubmittelpunkt aus dem torsionsweichen Bereich verschoben über die Übergangszonen in den Bereich der Trägerenden, also in den torsionssteifen Bereich.

Bevorzugt wird mit den Einprägungen angestrebt, den Verlauf der Schubmittelpunktslage so zu ändern, dass er Teil einer logarithmischen Spirale ist. Denkbar sind aber auch andere Verläufe, zum Beispiel nach Art einer Parabel. Der jeweils genaue Verlauf richtet sich nach der Geometrie der Fahrzeugachse und der Belastung des Querträgers. Er wird im jeweiligen Projekt neu berechnet. Entsprechend wird die Konfiguration der Einprägungen dann festgelegt.

Bei der Erfindung können gezogene Rohre oder von Platinen abgeteilte, umgeformte und geschweißte Rohre eingesetzt werden. Außerdem werden deutlich höhere Rollraten erzielt, ohne dass größere und dickere Rohre eingesetzt werden müssten.

Eine vorteilhafte Ausführungsform der Erfindung besteht in den Merkmalen des Anspruchs 2. Danach kontaktieren den Trägerenden abgewandte Sektoren der mit den muldenartigen Einprägungen versehenen Abschnitte der äußeren Wandbereiche benachbarte Abschnitte im Kammbereich der die Längsrinne begrenzenden inneren Wandbereiche linienförmig, Der Kontakt erfolgt vorzugsweise in der vertikalen Mittellängsebene des Querträgers.

Der linienförmige Kontakt zwischen den äußeren Wandbereichen und den inneren Wandbereichen kann gemäß den Merkmalen des Anspruchs 3 dadurch erzielt werden, dass den Trägerenden abgewandte Sektoren der mit den muldenartigen Einprägungen versehenen Abschnitte der äußeren Wandbereiche zu benachbarten Abschnitten der die Längsrinne begrenzenden inneren Wandbereiche gegensinnig gekrümmt sind. Der Grad der Krümmung hängt von den jeweiligen Erfordernissen beim Einsatz des Querträgers als Bestandteil einer Verbundlenkerhinterachse, Koppellenkerachse oder Twist Beam-Achse ab.

Eine weitere Möglichkeit des linienförmigen Kontakts besteht in den Merkmalen des Anspruchs 4. Danach verlaufen den Trägerenden abgewandte Sektoren der mit den muldenartigen Einprägungen versehenen Abschnitte der äußeren Wandbereiche tangential zu benachbarten Abschnitten der die Längsrinne begrenzenden inneren Wandbereiche.

Entsprechend den Merkmalen des Anspruchs 5 sieht die Erfindung im Rahmen einer weiteren Ausführungsform vor, dass den Trägerenden abgewandte Sektoren der mit den muldenartigen Einprägungen versehenen Abschnitte der äußeren Wandbereiche zu benachbarten Abschnitten der die Längsrinne begrenzenden inneren Wandbereiche gleichsinnig gekrümmt sind.

Im Rahmen dieser gleichsinnigen Krümmung kann es nach Anspruch 6 von Vorteil sein, dass den Trägerenden abgewandte Sektoren der mit den muldenartigen Einprägungen versehenen Abschnitte der äußeren Wandbereiche benachbarte Abschnitte der die Längsrinne begrenzenden inneren Wandbereiche flächig kontaktieren. Die Größe des Flächenkontakts hängt von den Einsatzbedingungen des Querträgers ab.

Schließlich ist es entsprechend einer weiteren Ausführungsform nach Anspruch 7 aber auch möglich, dass den Trägerenden abgewandte Sektoren der mit den muldenartigen Einprägungen versehenen Abschnitte der äußeren Wandbereiche mit Abstand zu benachbarten Abschnitten der die Längsrinne begrenzenden inneren Wandbereiche angeordnet sind.

Wichtig ist es nach der Erfindung - unabhängig von der jeweiligen Ausführungsform - dass in den Übergangszonen zwischen dem torsionsweichen Mittelabschnitt und den torsionssteifen Trägerenden (rund oder oval) in den äußeren Wandbereichen zwar sich in Längsrichtung des Querträgers erstreckende muldenartige Einprägungen vorgesehen sind, dass jedoch in den den Trägerenden abgewandten Sektoren der mit den muldenartigen Einprägungen versehenen äußeren Wandbereiche sich diese Wandbereiche den die Längsrinne begrenzenden inneren Wandbereichen linienförmig oder flächig nähern bzw. hiermit in Kontakt stehen. Die inneren Wandbereiche werden danach nicht mit Sicken oder Mulden versehen.

Die Erfindung ist nachfolgend anhand von in den Zeichnungen dargestellten Ausführungsbeispielen näher erläutert. Es zeigen:
- Figur 1: in schematischer perspektivischer Darstellung einen Querträger für eine Verbundlenkerhinterachse;
- Figur 2: den Ausschnitt II der Figur 1 im vertikalen Längsschnitt;
- Figur 3: einen Querschnitt durch die Darstellung der Figur 2 entlang der Linie III-III in Richtung der Pfeile IIIa gesehen;
- Figur 4: einen Querschnitt durch die Darstellung der Figur 2 entlang der Linie IV-IV in Richtung der Pfeile IVa gesehen;
- Figur 5: einen Querschnitt durch die Darstellung der Figur 2 entlang der Linie V-V in Richtung der Pfeile Va gesehen;
- Figur 6: einen Querschnitt durch die Darstellung der Figur 2 entlang der Linie V-V in Richtung der Pfeile Va gesehen, gemäß einer weiteren Ausführungsform;
- Figur 7: einen Querschnitt durch die Darstellung der Figur 2 entlang der Linie V-V in Richtung der Pfeile Va gesehen, gemäß einer dritten Ausführungsform und
- Figur 8: einen Querschnitt durch die Darstellung der Figur 2 entlang der Linie V-V in Richtung der Pfeile Va gesehen, gemäß einer vierten Ausführungsform.

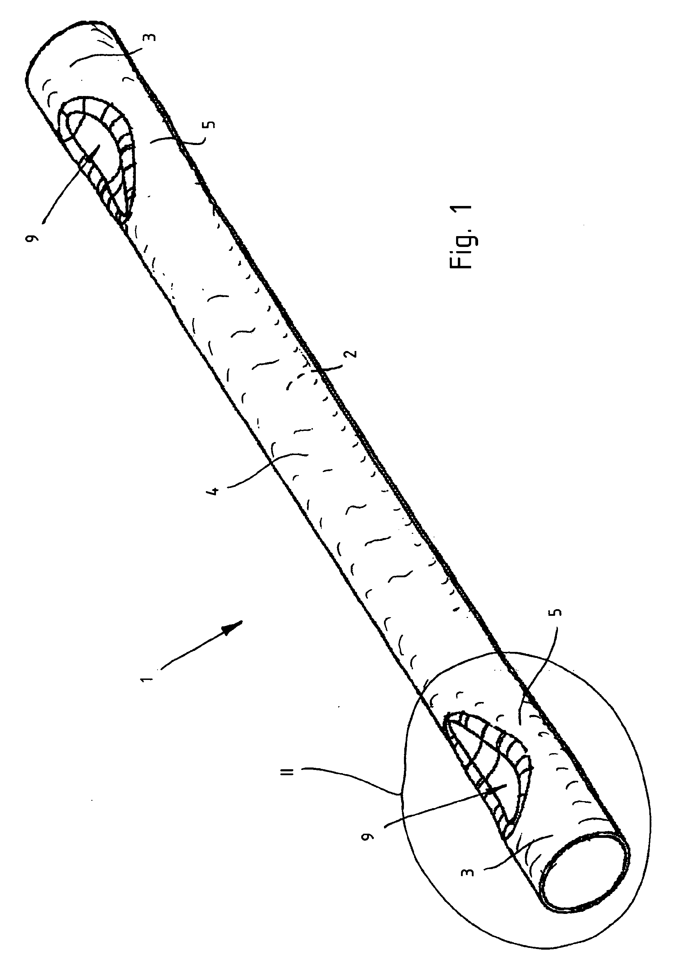

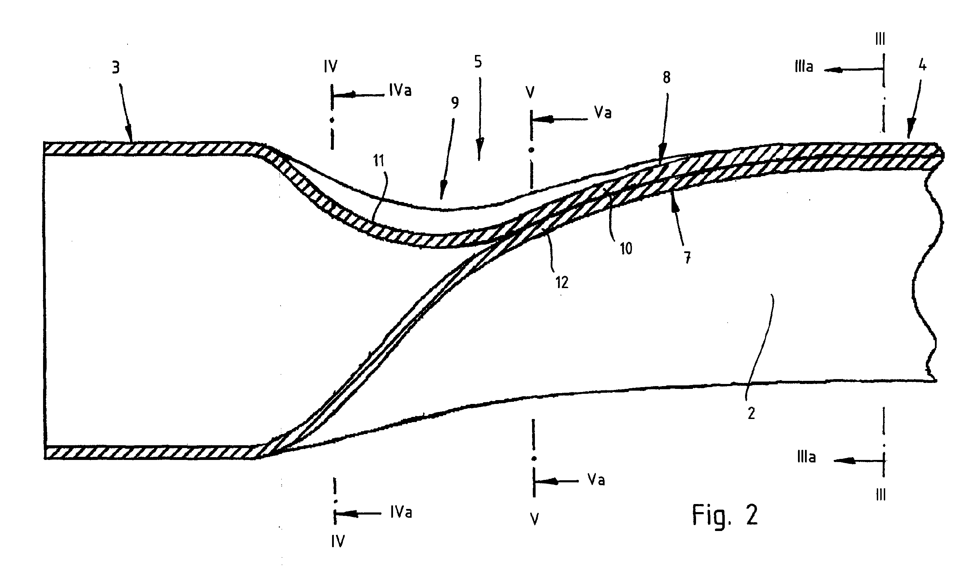

In den Figuren 1 und 2 ist mit 1 ein Querträger als Bestandteil einer nicht näher veranschaulichten Verbundlenkerhinterachse für einen Personenkraftwagen bezeichnet.

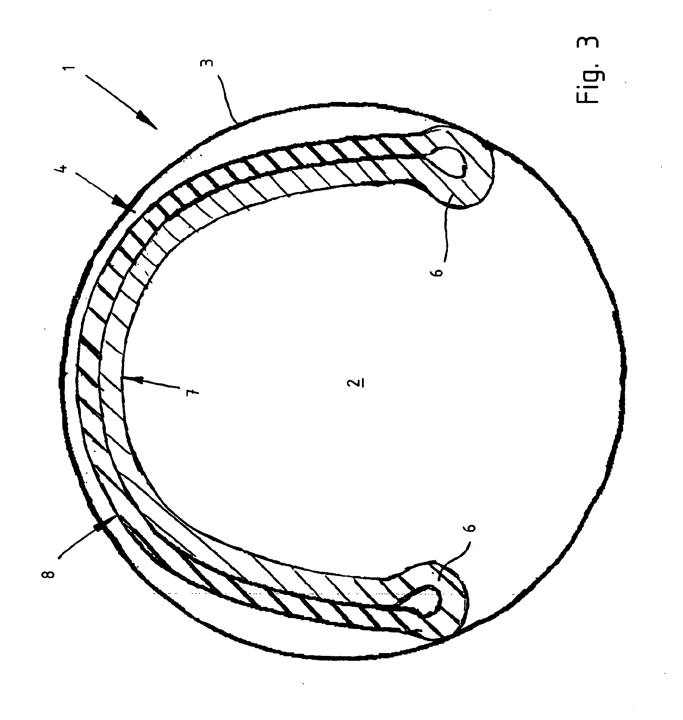

Bei diesem Querträger 1 sind unter Ausbildung einer Längsrinne 2 zwischen rohrförmigen torsionssteifen Trägerenden 3 ein doppelwandiger, im Querschnitt U-förmiger torsionsweicher Mittelabschnitt 4 und zwischen den Trägerenden 3 und dem Mittelabschnitt 4 vom rohrförmigen in den U-förmigen Querschnitt kontinuierlich wechselnde Übergangszonen 5 vorgesehen. Hierbei zeigt die Figur 3 den Querschnitt des Querträgers 1 im torsionsweichen Mittelabschnitt 4. Es ist zu sehen, dass hier bis auf die umgebogenen Enden 6 die die Längsrinne 2 begrenzenden inneren Wandbereiche 7 die äußeren Wandbereiche 8 kontaktieren.

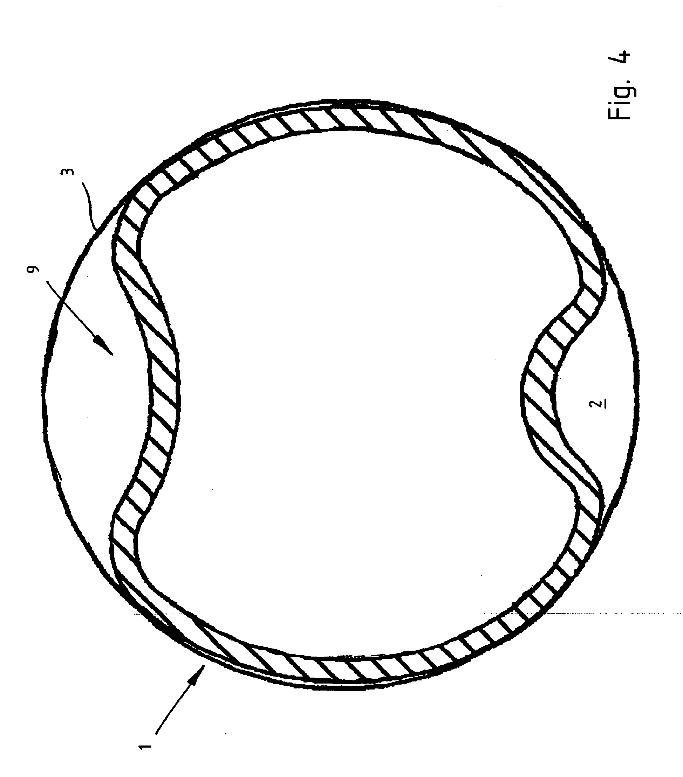

Bei gemeinsamer Betrachtung der Figuren 1, 2, 4 und 5 wird deutlich, dass durch eine Verformung - beispielsweise durch einen sich in Längsrichtung des Querträgers 1 erstreckenden, nicht näher dargestellten Schwertstempel - die Längsrinne 2 - ausgehend von den torsionssteifen Trägerenden 3 - allmählich in den Übergangszonen 5 ausgebildet wird, bis sie am Ende der Übergangszonen 5 den Querschnitt gemäß der Figur 3 ereicht.

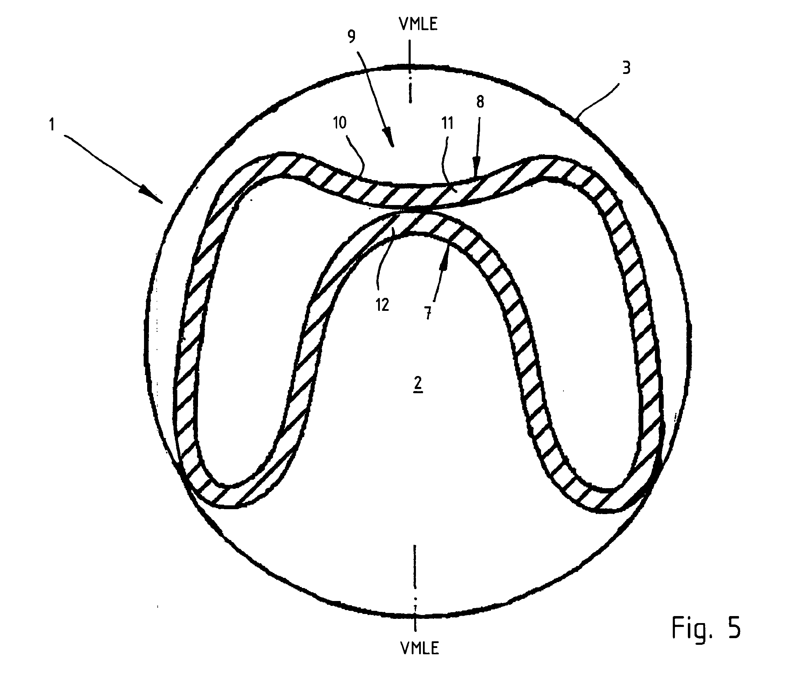

In den Übergangszonen 5 werden in den äußeren Wandbereichen 8 des Querträgers 1 muldenartige Einprägungen 9 vorgesehen, die sich in Längsrichtung des Querträgers 1 erstrecken. Wie die Ausführungsform der Figur 5 in Verbindung mit der Figur 2 zeigt, kann durch eine mehr oder weniger starke Krümmung der den Trägerenden 3 abgewandten Sektoren 10 der mit den muldenartigen Einprägungen 9 versehenen Abschnitte 11 der äußeren Wandbereiche 8 im Kammbereich der die Längsrinne 2 begrenzenden inneren Wandbereiche 7 mit den benachbarten Abschnitten 12 der Längsrinne 2 ein linienförmiger Kontakt erzeugt werden. Dieser linienförmige Kontakt liegt dann bevorzugt in der vertikalen Mittellängsebene VMLE des Querträgers 1.

Die äußeren Wandbereiche 8 sind mithin zu den inneren Wandbereichen 7 gegensinnig gekrümmt. Die Krümmung hängt von der Konturierung der Einprägungen 9 ab.

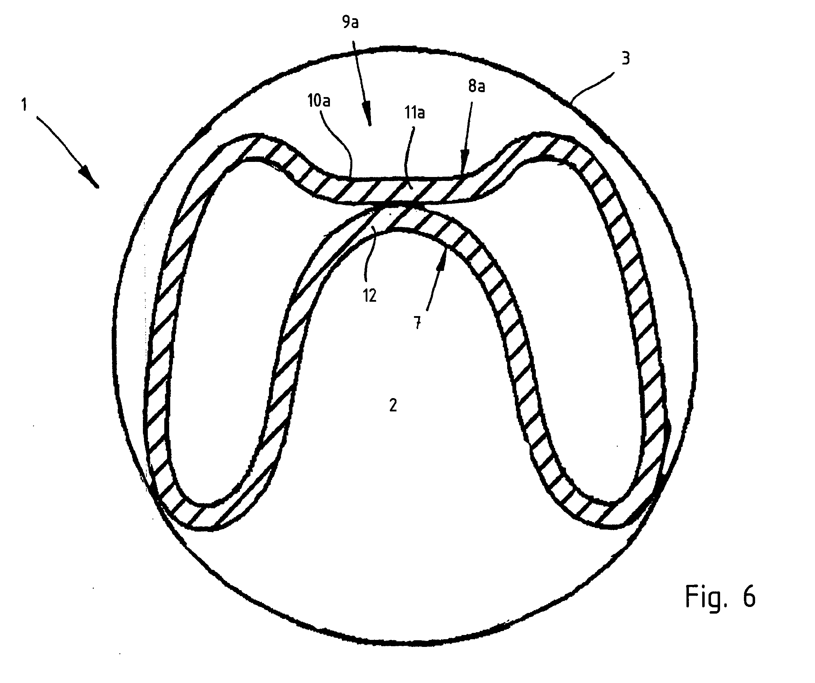

Die Figur 6 zeigt eine Ausführungsform, bei welcher den Trägerenden 3 abgewandte Sektoren 10a der mit den muldenartigen Einprägungen 9a versehenen Abschnitte 11a der äußeren Wandbereiche 8a zu benachbarten Abschnitten 12 der die Längsrinne 2 begrenzenden inneren Wandbereiche 7 tangential verlaufen.

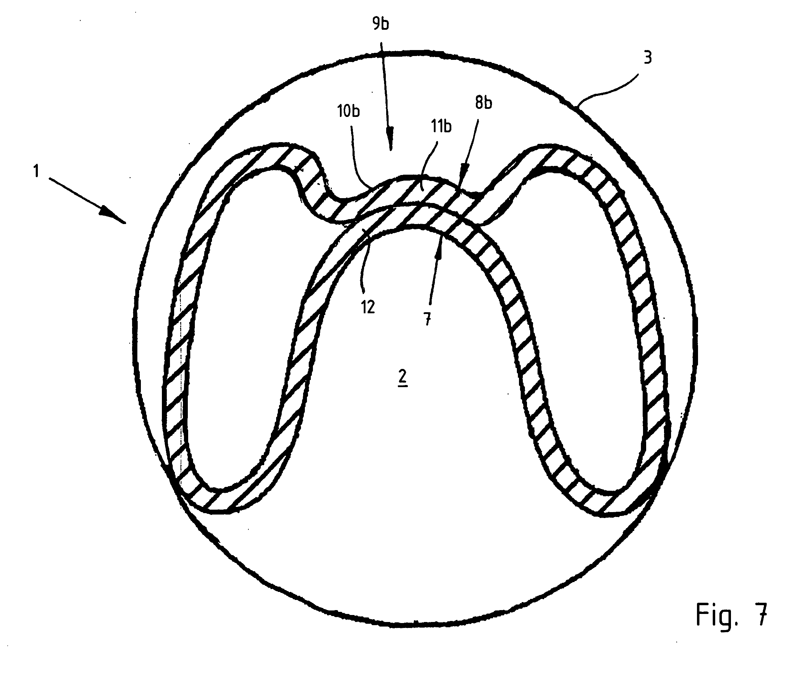

Es kann aber auch ein begrenzter Flächenkontakt zwischen den den Trägerenden 3 abgewandten Sektoren 10b der mit den muldenartigen Einprägungen 9b versehenen Abschnitte 11 b der äußeren Wandbereiche 8b und den benachbarten Abschnitten 12 der die Längsrinne 2 begrenzenden inneren Wandbereiche 7 hergestellt werden. Ein solcher Kontakt ist beispielsweise in der Figur 7 veranschaulicht, wo sich diese Sektoren 10b über eine begrenzte Umfangslänge der Abschnitte 12 nahe des Kammbereichs der die Längsrinne 2 begrenzenden inneren Wandbereiche 7 erstrecken.

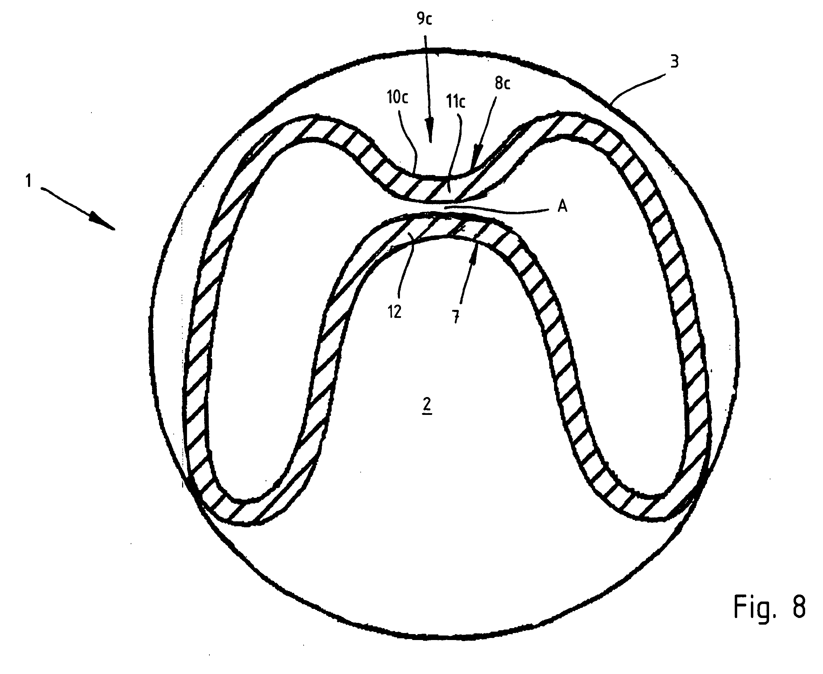

Während bei den Ausführungsformen der Figuren 5 bis 7 die inneren Wandbereiche 12 und die den Trägerenden 3 abgewandten Sektoren 10, 10a, 10b der mit den muldenartigen Einprägungen 9, 9a, 9b versehenen Abschnitte 11, 11a, 11b äußeren Wandbereiche 8, 8a, 8b sich linienförmig oder flächig berühren, sieht die Ausführungsform der Figur 8 vor, dass den Trägerenden 3 abgewandte Sektoren 10c der mit den muldenartigen Einprägungen 9c versehenen Abschnitte 11c der äußeren Wandbereiche 8c mit Abstand A zu den benachbarten Abschnitten 12 der die Längsrinne 2 begrenzenden inneren Wandbereiche 7 angeordnet sind. Beim Ausführungsbeispiel der Figur 8 sind die inneren Wandbereiche 7 und die äußeren Wandbereiche 8 gegensinnig gekrümmt.

Es ist aber auch vorstellbar, dass die in den Figuren 5 bis 7 dargestellten Ausführungsformen hinsichtlich der äußeren und inneren Wandbereiche 8, 8a, 8b bzw. 12 im Abstand A zueinander angeordnet sind.

### Bezugszeichen:

- 1 -: Querträger
- 2 -: Längsrinne in 1
- 3 -: Trägerenden v. 1
- 4 -: Mittelabschnitt v. 1
- 5 -: Übergangszonen zw. 3 u. 4
- 6 -: umgebogene Enden
- 7 -: innere Wandbereiche
- 8 -: äußere Wandbereiche
8a äußere Wandbereiche
8b äußere Wandbereiche
8c äußere Wandbereiche
- 9 -: Einprägungen
9a Einprägungen in 8a
9b Einprägungen in 8b
9c Einprägungen in 8c
- 10 -: Sektoren v. 11
10a Sektoren v. 11a
10b Sektoren v. 11b
10c Sektoren v. 11c
- 11 -: Abschnitte v. 8
11a Abschnitte v. 8a
11b Abschnitte v. 8b
11c Abschnitte v. 8c
- 12-: Abschnitte v. 7

- A -: Abstand zw. 8 u. 7
- VMLE -: vertikale Mittellängsebene v. 1

## Patentansprüche

1. Querträger einer Fahrzeugachse, bei welchem unter Ausbildung einer Längsrinne (2) zwischen rohrförmigen torsionssteifen Trägerenden (3) ein doppelwandiger, im Querschnitt U-förmiger torsionsweicher Mittelabschnitt (4) und zwischen den Trägerenden (3) und dem Mittelabschnitt (4) vom rohrförmigen in den U-förmigen Querschnitt kontinuierlich wechselnde Übergangszonen (5) vorgesehen sind, **dadurch gekennzeichnet, dass** in den Übergangszonen (5) neben den bodenseitigen Abschnitten (12) der die Längsrinne (2) begrenzenden inneren Wandbereiche (7) liegende Abschnitte (11, 11a, 11b, 11c) von äußeren Wandbereichen (8, 8a, 8b, 8c) mit sich längs erstreckenden muldenartigen Einprägungen (9, 9a, 9b, 9c) versehen sind.

2. Querträger nach Anspruch 1, **dadurch gekennzeichnet, dass** den Trägerenden (3) abgewandte Sektoren (10, 10a) der mit den muldenartigen Einprägungen (9, 9a) versehenen Abschnitte (11, 11a) der äußeren Wandbereiche (8, 8a) benachbarte Abschnitte (12) im Kammbereich der die Längsrinne (2) begrenzenden inneren Wandbereiche (7) linienförmig kontaktieren.

3. Querträger nach Anspruch 2, **dadurch gekennzeichnet, dass** den Trägerenden (3) abgewandte Sektoren (10, 10c) der mit den muldenartigen Einprägungen (9, 9c) versehenen Abschnitte (11, 11 c) der äußeren Wandbereiche (8, 8c) zu benachbarten Abschnitten (12) der die Längsrinne (2) begrenzenden inneren Wandbereiche (7) gegensinnig gekrümmt sind.

4. Querträger nach Anspruch 2, **dadurch gekennzeichnet, dass** den Trägerenden (3) abgewandte Sektoren (10a) der mit den muldenartigen Einprägungen (9a) versehenen Abschnitte (11a) der äußeren Wandbereiche (8a) zu benachbarten Abschnitten (12) der die Längsrinne (2) begrenzenden inneren Wandbereiche (7) tangential verlaufen.

5. Querträger nach Anspruch 1, **dadurch gekennzeichnet, dass** den Trägerenden (3) abgewandte Sektoren (10b) der mit den muldenartigen Einprägungen (9b) versehenen Abschnitte (11b) der äußeren Wandbereiche (8b) zu benachbarten Abschnitten (12) der die Längsrinne (2) begrenzenden inneren Wandbereiche (7) gleichsinnig gekrümmt sind.

6. Querträger nach Anspruch 1 oder 5, **dadurch gekennzeichnet, dass** den Trägerenden (3) abgewandte Sektoren (10b) der mit den muldenartigen Einprägungen (9b) versehenen Abschnitte (11b) der äußeren Wandbereiche (8b) benachbarte Abschnitte (12) der die Längsrinne (2) begrenzenden inneren Wandbereiche (7) flächig kontaktieren.

7. Querträger nach Anspruch 1, **dadurch gekennzeichnet, dass** den Trägerenden (3) abgewandte Sektoren (10c) der mit den muldenartigen Einprägungen (9c) versehenen Abschnitte (11c) der äußeren Wandbereiche (8c) mit Abstand (A) zu benachbarten Abschnitten (12) der die Längsrinne (2) begrenzenden inneren Wandbereiche (7) angeordnet sind.
